# EUROPEAN PATENT SPECIFICATION

(11) **EP 3 976 862 B1**
(45) Date of publication and mention of the grant of the patent: **17.07.2024**
(21) Application number: 20735651.0
(22) Date of filing: 28.05.2020
(51) Int. Cl.: B23H 3/00, C25F 7/00

(54) **AN ELECTROCHEMICAL MACHINING DEVICE**
ELEKTROCHEMISCHE BEARBEITUNGSVORRICHTUNG
DISPOSITIF D'USINAGE ÉLECTROCHIMIQUE

(30) Priority: 31.05.2019 GB 201907798
(43) Date of publication of application: 06.04.2022
(73) Proprietor: Texture Jet Ltd, Nottingham Nottinghamshire NG6 9FH (GB)
(72) Inventor: MITCHELL-SMITH, Jonathon, Nottingham Nottinghamshire NG8 1BB (GB); CLARE, Adam, Nottingham Nottinghamshire NG8 1BB (GB); SPEIDEL, Alistair, Nottingham Nottinghamshire NG8 1BB (GB); BISTEROV, Ivan, Nottingham Nottinghamshire NG8 1BB (GB)
(74) Representative: Sugden, Mark William
(86) International application number: PCT/GB2020/051294
(87) International publication number: WO 2020/240188

(56) References cited:
- US-A- 4 882 019
- US-A- 5 002 643
- US-A1- 2010 072 077
- US-A1- 2016 361 770

## Description

### FIELD OF THE INVENTION

The present invention relates to an electrochemical machining device for machining a surface of a workpiece.

### BACKGROUND OF THE INVENTION

Electrochemical machining, e.g. electrochemical jet processing, is a known process for selectively machining a surface of a workpiece. This is done by applying a voltage between a part, e.g. a nozzle, of an electrochemical machining device and the surface to be machined, whilst dispensing a stream or jet of electrolyte from the nozzle towards the surface. This machining method is advantageous as it enables surfaces to be machined via an electrochemical reaction, such that it is possible to machine a surface as long as the surface material is conductive. Through electrochemical machining of surfaces, surfaces can be roughened to improve bonding for mounting components and applying coatings to the surface. Surface machining can also be used for modifying the optical and/or tribological properties of the surface, revealing the grain boundaries of the microstructure of the surface, or polishing the surface to produce a homogenous surface finish.

Known systems are large fixed systems and require a workpiece to be loaded into the device to be machined. The requirement for loading a part to be machined into the device required parts to be moved away from the production line, thus disrupting the production process. Additionally, it can also be problematic loading workpieces that are large and/or have complex geometries into a machining device. US2010/072077 discloses an electrolytic deburring apparatus and method. US5002643 discloses an electrode with outside flow of electrolyte for electrochemical machining and a method. US4882019 discloses an apparatus and method for polishing a plumbing or electrical fixture. US2016/361770 discloses dynamic adaptive flushing for workpiece erosion.

The present invention seeks to overcome or at least mitigate one or more problems associated with the prior art.

### SUMMARY OF THE INVENTION

A first aspect of the invention provides an electrochemical machining device for machining a surface of a workpiece, the electrochemical machining device comprising: a base unit; and a portable machining unit comprising a housing, a nozzle disposed within the housing and configured for dispensing an electrolyte jet towards a surface of a workpiece, wherein the machining unit is connected to the base unit via an umbilical cord for supplying power to the machining unit and for supplying electrolyte to the nozzle, wherein the electrochemical machining device is configured to apply a charge to the nozzle and to apply a charge to a surface of a workpiece such that the nozzle and said surface define first and second electrodes of an electrolytic cell, in use, and wherein the first electrode is arranged so as to be spaced apart from a surface of a workpiece, in use.

The electrochemical machining device is configured to apply a charge to the nozzle such that the nozzle defines the first electrode.

The nozzle and the surface of the workpiece act as electrodes in an electrolytic cell, which allows the machining to occur. In a first mode of operation, a negative charge is applied to the nozzle and a positive charge is applied to a surface of a workpiece, which machines the surface. In a second mode of operation, a positive charge is applied to the nozzle and a negative charge is applied to a surface of a workpiece, which deposits material within the electrolyte onto the surface. In order for the machining process to be able to take place, a spacing between the electrode and the workpiece surface is required.

Surfaces processed through this electrochemical process do not suffer from thermal damage and hence this technique is highly suited to finishing procedures in high value manufacturing across the aerospace, automotive and biomedical sectors.

In the electrochemical machining device, the area over which the surface of a workpiece is machined (i.e. either through removal or deposition of material) is defined by the electrolyte jet that impacts the surface (e.g. the speed/flow rate of the electrolyte jet). This process has no requirement of masking due to the phenomenon known as hydraulic jump. The electrolyte is accelerated through the nozzle and expelled at a supercritical speed so that when impinged on the work surface, it forms a thin film radially around the impact point. This thin film grows shallower as it travels radially outwardly from the impact point due to friction until the hydraulic jump occurs and the water thickness increases and becomes subcritical in flow rate. Energy density therefore is concentrated over this thin film area that is directly beneath the nozzle. This leads to a self-limiting localised machining of the area under the nozzle. This arrangement advantageously provides highly localised/focused machining, which removes the need for a mask in the machining process. Such localised/focused machining is not possible without jetting of an electrolyte towards a surface of a workpiece.

Providing a portable (e.g. hand-held) machining unit that is connected to a base unit via a flexible umbilical cord enables the machining unit to be easily moved onto a surface to be machined. This enables surfaces to be machined in-situ, without requiring them to be removed from a production line and into a machining device.

In exemplary embodiments, the electrolyte is a water-based electrolyte. The electrolyte may comprise a water-salt solution. For example the electrolyte may be a water based solution comprising one or more of sodium nitrate, sodium chloride, sodium iodide etc.

In exemplary embodiments, the electrolyte is a substantially water free ionic solvent.

In exemplary embodiments, the machining unit may include a contact electrode configured and arranged to contact at least a portion of a surface of a workpiece, in use, for applying a charge thereto.

In exemplary embodiments, the housing comprises the contact electrode.

Through the contact electrode, the machining unit is able to apply to charge to the surface of a workpiece without requiring any additional/separate components.

In exemplary embodiments, the contact electrode may be provided in the form of an elongate conductive member, e.g. a rod, arranged to contact a surface of a workpiece, in use.

In exemplary embodiments, the elongate conductive member may comprises a contact member rotatably mounted to a distal end of the elongate member, wherein the contact member is arranged so as to contact a surface of a workpiece, in use.

The contact electrode may be formed from a conductive material.

The contact electrode may be formed from a malleable or deformable metal, such as copper, aluminium, aluminium alloys, gold, silver platinum etc.

In exemplary embodiments, the machining unit may be configured to be moveable over a surface of a workpiece, in use.

The housing may comprise one or more contact points arranged to engage a surface of workpiece and be moveable/slideable thereover, in use.

This enables the machining unit to be moved over a surface without having to remove and the re-attach said machining unit, thus enabling machining to be carried out continuously over a surface of a workpiece.

The one or more contact points may be formed from a malleable or deformable material.

This arrangement is such that only a malleable material engages the surface of a workpiece, in use, which helps to reduce/prevent accidental damage to the surface of a workpiece.

The one or more contact points may be formed from a conductive material such that said one or more contact points form the contact electrode.

The one or more contact points may be formed from a malleable or deformable metal, such as copper, aluminium, aluminium alloys, gold, silver platinum etc.

In exemplary embodiments, the one or more contact points form the contact electrode.

The one or more contact points may be configured to be moveable/slideable over a surface of a workpiece, in use, whilst applying a charge to said surface.

In exemplary embodiments, the housing is configured to define the spacing between the nozzle and a surface of a workpiece.

In exemplary embodiments, the one or more contact points and/or the contact electrode are arranged within the housing to define the spacing between the nozzle and a surface of a workpiece, in use.

This arrangement ensures that a spacing will be provided between the nozzle and the surface when an operator places the housing onto a surface.

In exemplary embodiments, the nozzle is moveable within the housing.

The nozzle may be moveable laterally within the housing, e.g. along a plane substantially parallel with the surface, in use.

In this way, the machining unit can be positioned on a surface, and the nozzle is able to travel over and machine a larger region of the surface without moving the machining device (i.e. the housing). This arrangement aids in the machining of a surface.

In exemplary embodiments, the nozzle is moveable within the housing such that the spacing between the nozzle and a surface of a workpiece is adjustable.

The spacing between the electrode and the workpiece surface (i.e. the inter-electrode gap) affects the processing of the surface. Providing a nozzle that is moveable in a direction perpendicular to a surface of a workpiece, allows the spacing between the nozzle and the surface to be varied for different machining requirements, e.g. for different surface materials. This allows a greater degree of control of the surface topography created.

In exemplary embodiments, the nozzle is pivotable within the housing for changing the angle of the electrolyte jet relative to a surface of a workpiece, in use.

Providing a pivotable nozzle enables the angle of the electrolyte jet with respect to the workpiece to be varied. This allows a greater degree of control of the surface topography created and optimised cycle times due to exploitation of the energy density values found at the leading and trailing edges of the jet. This enables only the requirement of a single pass to create the required topography rather than multiple passes with a standard jet configuration.

In exemplary embodiments, the device comprises a control system configured to determine the spacing between the nozzle and a surface of a workpiece, in use.

The spacing between the nozzle and the surface (i.e. the two electrodes of the electrolytic cell) changes the parameters of the machining process. Monitoring the spacing between the electrodes enables an operator to better control the surface machining as it enables the spacing to be monitored in-situ.

In exemplary embodiments, the control system is configured so as to maintain a substantially constant spacing between the nozzle and a surface of a workpiece, during a machining operation.

This arrangement enables the device to determine the operating parameters of a machining operation and ensure that the operating parameter remains constant during an operation. This enables the machine to uniformly machine a particular surface during a single machining operation even when the surface of the workpiece is not uniform (i.e. if the surface is curved or is bumpy).

In exemplary embodiments, the control system determines the spacing between the nozzle and a surface of a workpiece by calculating an electrical resistance therebetween, during a machining operation.

In exemplary embodiments, the housing is configured to define an enclosed workspace when positioned against a surface of a workpiece.

This arrangement ensures that all of the electrolyte and debris is contained within the electrochemical machining device during a machining operation.

In exemplary embodiments, the base unit comprises an electrolyte reservoir for supplying electrolyte to the nozzle, and wherein the machining unit comprises a retrieval arrangement for retrieving used electrolyte.

Providing the device with an electrolyte reservoir enables the device to be portable without needing the device to be connected to an external electrolyte source.

Further, during machining of a surface the electrolyte will increasingly contain debris from the machined surface, this arrangement allows the workspace to be continually cleaned of used electrolyte and debris, which may be detrimental to the electrochemical machining process.

In exemplary embodiments, the retrieval arrangement is arranged to return the retrieved electrolyte to the electrolyte reservoir.

This arrangement enables the electrolyte to be recovered and reused, which increases the amount of machining that the device can carry out before the electrolyte reservoir has to be refilled. This extended time between service intervals has the benefit of making the electrochemical machining device to be more portable.

Allowing machined debris to flow into the electrolyte reservoir would degrade the electrolyte. Filtering the recovered electrolyte improves the quality thereof, and enables the recovered electrolyte to be reused without being detrimental to the electrochemical machining process.

In exemplary embodiments, the retrieved electrolyte is filtered prior to re-entering the electrolyte reservoir.

Allowing machined debris to flow into the electrolyte reservoir could be degrade the electrolyte and may be detrimental to subsequent electrochemical machining processes. This may have an effect of the consistency and repeatability of a machining process. Filtering the recovered electrolyte improves the quality of the electrolyte, and so improves the machining process.

In exemplary embodiments, the retrieval arrangement comprises one or more retrieval suction pumps disposed within the housing.

In exemplary embodiments, the machining unit comprises an attachment arrangement for attaching the machining unit onto a surface of a workpiece, in use.

This arrangement allows the machining unit to be affixed to a surface to enable a machining process to be carried out without requiring an operator to hold the machining unit to the surface to be machined.

In exemplary embodiments, the attachment arrangement is configured to allow the machining unit to move with respect to a surface of a workpiece, in use, whilst remaining attached thereto.

In this way, once the machining unit has been positioned on a surface of a workpiece, the machining process may be able to be controlled remotely.

In exemplary embodiments, the attachment arrangement comprises an attachment suction arrangement for attaching the machining unit onto a surface of a workpiece, in use.

Provision of an attachment suction arrangement (i.e. one or more suction pumps) provides an effective method of enabling the hand-held machining unit to be secured onto a surface.

In exemplary embodiments, the device comprises an electrolyte monitoring system for monitoring the electrolyte in the electrolyte reservoir.

This arrangement enables the device to monitor the quality of the recovered electrolyte, allowing an operator to determine when the electrolyte within the reservoir is sub-optimal.

In exemplary embodiments, the electrolyte monitoring system comprises one or more of: a pH sensor; a temperature sensor; an electrical conductivity sensor; and/or a particulate matter for determining the debris contained in the electrolyte within the electrolyte reservoir.

This arrangement enables the device to monitor the quality of the recovered electrolyte, allowing an operator to determine when the electrolyte within the reservoir is sub-optimal.

In exemplary embodiments, the machining unit is configured to be driven over a surface of workpiece, in use. The machining unit may comprise a drive arrangement configured to move the machining unit over a surface of a workpiece, in use.

This arrangement allows the machining unit to be moved along a surface remotely such that the machining can be carried out over different areas without an operator being required to hold the machining unit to the surface and move it along said surface.

In this way, once the machining unit has been positioned on a surface of a workpiece, the machining process may be able to be controlled remotely via a control system configured to control movement of the machining unit via the drive arrangement.

Moreover, movement of the machining unit can be pre-programmed into the machining device prior to operation. Once the machining unit has been positioned on a surface of a workpiece, the machining process may be able to be controlled remotely.

In exemplary embodiments, the umbilical cord is connected to either the base unit and/or the machining unit via a quick connect/disconnect coupling configured such that, upon disconnection, supply of power and electrolyte is stopped.

In exemplary embodiments, the base unit is portable, preferably wherein the base unit is mounted on wheels.

In exemplary embodiments, the nozzle is removably mounted within the machining unit housing.

This allows for the nozzle to be exchanged for different machining operations (e.g. for surfaces of different materials), without requiring the entire machining unit to be replaced.

In exemplary embodiments, the machining unit comprises a gas outlet arranged to dispense a gas stream which at least partially encircles the electrolyte jet, in use. The gas stream may entirely encircle the electrolyte jet.

The provision of an air shroud around the jet has been found to focus the electrolyte jet on the surface, thus improving the accuracy of the matching process.

In exemplary embodiments, the machining unit comprises two nozzles for dispensing electrolyte.

This allows a greater degree of control of the surface topography created and optimised cycle times due to exploitation of the dual electrolyte jets.

In exemplary embodiments, the base unit comprises a second electrolyte reservoir, and each of the two nozzles is configured for dispensing a different electrolyte.

The use of two different electrolytes in a single electrochemical machining process (known as multiplexing) allows a greater degree of control of the surface topography created and optimised cycle times due to exploitation of the dual electrolyte jets.

### BRIEF DESCRIPTION OF THE DRAWINGS

Embodiments of the invention will now be described with reference to the accompanying drawings, in which:
Figure 1 shows an electrochemical machining device according to an embodiment including a base unit and a machining unit, where the machining unit is operated by a user;
Figure 2 shows a machining unit of the electrochemical machining device of Figure 1, where the machining unit is operated by a robotic arm;
Figure 3 shows a machining unit of the electrochemical machining device of Figure 1, where the machining unit is being driven over a surface;
Figure 4 is a schematic view of the electrochemical machining device of Figure 1; and
Figure 5 is a cross-sectional side view of a machining unit of the electrochemical machining device of Figure 1.

### DETAILED DESCRIPTION OF EMBODIMENT(S)

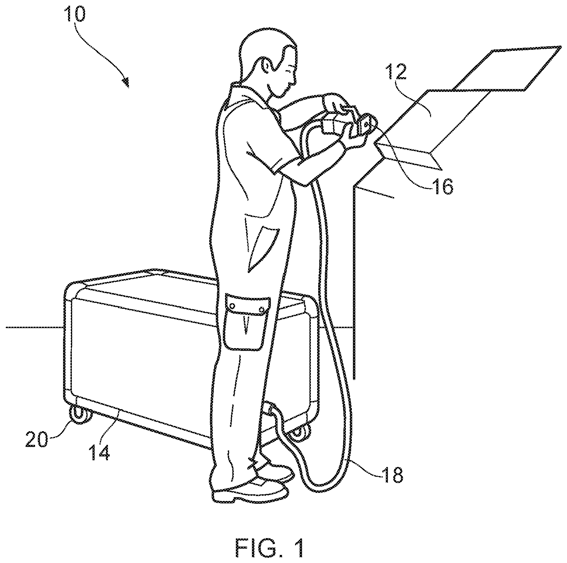

Referring firstly to Figure 1, an electrochemical machining device 10 for machining a surface 12 of a workpiece is illustrated.

The electrochemical machining device 10 includes a base unit 14 and a hand-held machining unit 16. The base unit 14 and machining unit 16 are connected via an umbilical cord 18 through which the base unit 14 is able to supply power and electrolyte to the machining unit 16.

Connection of the machining unit 16 to the base unit 14 via the flexible umbilical cord 18 enables the hand-held machining unit 16 to be moved independently of the base unit 14. Put another way, the machining unit 16 is provided as a portable unit. This arrangement enables the device 10 to be to be used in-situ either as part of a mobile device or as part of a fixed position machining system.

In the illustrated arrangement, the base unit 14 is shown as a portable base unit 14. The base unit 14 is mounted on wheels 20 so as to be moveable about a space (i.e. moveable to be close to a surface to be machined). In alternative arrangements, it will be appreciated that the base unit 14 may not be portable, and only the machining unit 16 may be transported/moved to a surface 12 to be machined.

As is illustrated in Figure 1, the machining unit 16 is held against a surface 12 of a workpiece to machine said surface 12. The machining unit 16 of Figure 1 is configured such that it is able to be moved over a surface 12 of a workpiece by an operator without having to remove and the re-attach said machining unit. This arrangement enables machining to be carried out continuously over the surface 12. Although not illustrated, the machining unit 16 may include one or more contact points arranged to engage the surface 12 and be moveable/slideable thereover.

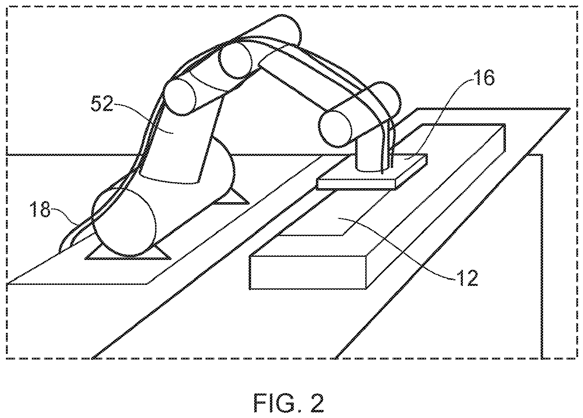

Referring to Figure 2, the machining unit 16 is moveable with respect to the base unit (not shown) and is operated by a robotic arm 52. The machining unit 16 is connected to the base unit via the umbilical cord 18. It will be appreciated that the robotic arm 52 may be provided as a part of an automated production line.

The machining unit 16 of Figure 2 is configured such that it is able to be moved over a surface 12 of a workpiece by robotic arm 52 without having to remove and the re-attach said machining unit. This arrangement enables machining to be carried out continuously over the surface 12. Although not illustrated, the machining unit 16 may include one or more contact points arranged to engage the surface 12 and be moveable/slideable thereover.

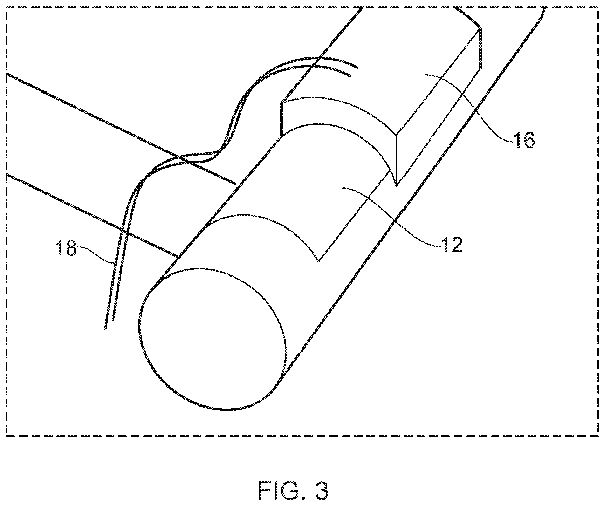

Referring to Figure 3, the machining unit 16 is positioned on a surface 12 of a workpiece. The machining unit 16 is connected to the base unit (not shown) via the umbilical cord 18. The machining unit 16 is configured to be driven over the surface 12.

In order to drive the machining unit 16 over the surface 12, a drive arrangement (not shown) is provided. The drive arrangement is configured to move the machining unit 16 over the surface 12. Provision of the drive arrangement enables the machining unit 16 to move over the surface 12 without requiring it to be manually moved an operator. In one arrangement, the electrochemical machining device 10 may be provided with a control system configured to control movement of the machining unit 16 via the drive arrangement. In the illustrated arrangement, movement of the machining unit 16 over the surface 12 is being controlled by a control system provided in the base unit. It will be appreciated that the drive arrangement may be provided as one or more wheels for propelling the machining unit 16 over the surface 12, or that any other suitable alternaitve drive arrangement may be used.

The machining unit 16 of Figure 3 is configured such that it is able to be moved (i.e. driven) over a surface 12 of a workpiece without having to remove and the re-attach said machining unit. This arrangement enables machining to be carried out continuously over the surface 12. Although not illustrated, the machining unit 16 may include one or more contact points arranged to engage the surface 12 and be moveable/slideable thereover.

The portable machining unit 16 illustrated in Figures 1, 2 and 3 is able to be easily moved, e.g. independently of the base unit 14, between different surfaces or to different positons on a single surface so as to carry out machining processes. It will be appreciated that the machining unit 16 is designed to be operated either manually (as illustrated in Figure 1) or as part of an automated process (as illustrated in Figure 2) or to be operated remotely (as illustrated in Figure 3).

The machining unit 16 is configured to modify the topography of a surface 12 through an electrochemical process. Providing a hand-held machining unit 16 that is able to machine a surface 12 in-situ, enables the surface 12 to be modified without requiring it to be removed from a machine production line and loaded onto a separate machining device.

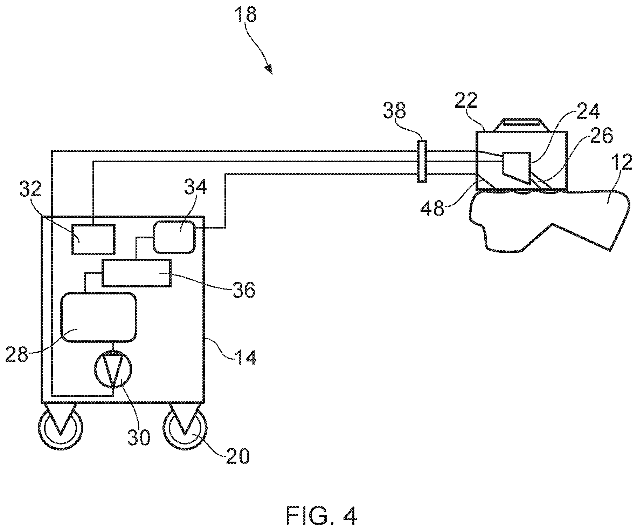

Referring now to Figure 4, the machining unit 16 is shown positioned on the surface 12 of a workpiece.

The machining unit 16 includes a housing 22. A nozzle 24 is positioned within the housing 22, and the nozzle 24 is configured to dispense an electrolyte jet 26 towards a surface 12 of a workpiece. The housing 22 is configured to define an enclosed workspace when positioned against a surface 12 of a workpiece.

It will be appreciated that the nozzle 24 may be removably mounted within the machining unit housing 22 to allow for different nozzles to be used for different machining operations.

In the embodiment, the electrolyte is a water-based electrolyte. The electrolyte is provided as a water-salt solution, for example a water based solution comprising one or more of sodium nitrate, sodium chloride, sodium iodide etc. It will be appreciated that any suitable electrolyte may be used, such as a substantially water free ionic solvent.

The electrochemical machining device 10 is configured to apply a charge to the nozzle 24 and the surface 12. In this way, the nozzle 24 and the surface 12 for first and second electrodes of an electrolytic cell. In alternative arrangements, the machining unit 16 may include an additional electrode, separate from the nozzle, and the electrochemical machining device may be configured to apply a charge to the additional electrode and the surface 12.

Material removal and deposition is achieved by an electrolyte being supplied through the nozzle 24 and jetted towards the surface 12. An electrical potential is applied between the nozzle 24 and the surface 12 resulting in either anodic dissolution of the surface 12, or deposition onto the surface 12.

In a first mode of operation, a negative charge is applied to the nozzle 24 and a positive charge is applied to the surface 12. In this first mode of operation, the device 10 etches away at the surface 12 so as to modify the topography thereof. In a second mode of operation, a positive charge is applied to the nozzle 24 and a negative charge is applied to the surface 12. In this second mode of operation, material (e.g. such as silica particles or additive coatings to allow functionalisation of the surface) are able to be deposited onto the surface 12, which modifies the surface topography thereof.

The nozzle 24 is arranged within the housing 22 so as to be spaced apart from the surface 12, in use. The spacing between the electrode 24 and the workpiece surface 12 (i.e. the inter-electrode gap) affects the processing of the surface 12. The nozzle 24 is moveable within the housing 22. The nozzle 24 is moveable within the housing 22 such that the spacing between the nozzle 24 and the surface 12 can be adjusted to suit a particular machining operation.

In order to be able to apply a charge to the nozzle 24 and the surface 12, the base unit 14 includes a power source 32 for supplying power to the machining unit 16 via the umbilical cord 18. It will be appreciated that in order to supply power to the machining unit 16, the power source 32 may include one or more batteries or may be connectable to an external power source.

The base unit 14 includes an electrolyte reservoir 28 for supplying electrolyte to the nozzle 24. Providing the device 10 (i.e. the base unit 14) with an electrolyte reservoir 28 enables the device 10 to be utilised away from an electrolyte source. In this way, the portability of the device 10 is improved. The base unit 14 also includes a fluid pump 30 for pumping fluid to the nozzle 24 of the machining unit 16

In order to remove the used electrolyte from the workspace, the machining unit 16 includes a retrieval arrangement 48 for retrieving the used electrolyte. The retrieval arrangement 48 is arranged to return the retrieved electrolyte to the electrolyte reservoir 28 via the umbilical cord 18. The retrieval arrangement 48 is provided in the form of one or more suction pumps (not shown), e.g. vacuum pumps. The one or more suction pumps are disposed within the housing 22.

Whilst the housing 22 has been described as forming an enclosed workspace when positioned against a surface 12 of a workpiece, it will be understood that said enclosed workspace will comprise one or more apertures 50 for one or more suction pumps therein. The suction pumps are configured to produce an air stream to draw in the retrieved electrolyte, and the air streams substantially cover the apertures such that the workspace is substantially enclosed (but the housing walls and the air streams of the suction pumps). In alternative arrangements, the suction pumps 50 may be provided on an exterior of the housing 22 or may be provided separate to the housing 22.

The electrolyte retrieved from the workspace can be re-used for a subsequent machining process. Prior to re-entering the electrolyte reservoir 28, the retrieved electrolyte passes through a filter 34 to remove the machined debris from the electrolyte. In this way, the base unit 14, which is separate from the machining unit 16, supplies, retrieves and refines the electrolyte.

The electrochemical machining device 10 is also provided with an electrolyte monitoring system 36 for monitoring the electrolyte. This arrangement allows an operator to monitor the quality of the electrolyte with the device 10. In the arrangement shown, the electrolyte monitoring system 36 is provided between the filter 34 and the reservoir 28. In order to characterise the electrolyte, the monitoring system 36 includes one or more of a pH sensor, a temperature sensor, an electrical conductivity sensor, and a particulate matter for determining the debris contained in the electrolyte within the electrolyte reservoir.

As discussed above, the umbilical cord 18 provides the machining unit 16 with power, electrolyte and also provides a flow path for a retrieval arrangement 48. The umbilical cord 18 connects the base unit 14 and the machining unit 16 via a quick connect/disconnect coupling 38. The quick connect/disconnect coupling 38 is configured such that, upon disconnection, the supply of power, electrolyte and suction is stopped.

Referring to Figure 5, the machining unit 16 is illustrated in more detail.

The machining unit 16 is provided with a contact electrode 44 configured and arranged to contact at least a portion of the surface 12, in use. Through this contact electrode 44, the machining unit 16 is able to apply to charge to the surface 12. In this way, the surface 12 and the nozzle 24 are able to form an electrolytic cell, to enable the electrochemical machining to occur. In the illustrated arrangement, the contact electrode 44 is provided within the housing 22.

As has been discussed above, the machining unit 16 is configured so as to be moveable over the surface 12. The housing includes one or more contact points arranged to engage the surface 12 and be moveable/slideable thereover.

The one or more contact points may be formed from a malleable or deformable material so as to minimise damage to the surface 12 as the machining unit 16 is moved thereover. In the illustrated arrangement, the one or more contact points are formed from a conductive material. Providing the contact point 44 as a conductive material enables the contact points to form the contact electrode. The one or more contact points may be formed from a malleable or deformable metal, such as copper, aluminium, aluminium alloys, gold, silver platinum etc.

In alternative arrangements, the contact electrode may be provided separately from the contact points. In such arrangements, the contact electrode may be provided in the form of an elongate conductive member, e.g. a rod, arranged to contact a surface of a workpiece, in use. The elongate member or rod may include a contact member (e.g. a ball) rotatably mounted at a distal end thereof that is arranged so as to contact the 12 surface of a workpiece. It will be understood that the contact electrode may be formed from a conductive material, such as a malleable or deformable metal e.g. copper, aluminium, aluminium alloys, gold, silver platinum etc.

The housing 22 is configured to define the spacing between the nozzle 24 and the surface 12. Put another way, the one or more contact points 44 are arranged within the housing 22 to define the spacing between the nozzle 24 and the surface 12. This arrangement ensures that a spacing will be provided between the nozzle 24 and the surface 12 when an operator places the housing 22 onto said surface 12.

The nozzle 24 is mounted so as to be moveable within the housing 22. In the illustrated arrangement, the nozzle 24 is moveable across a plane substantially parallel with the surface 12. Put another way, the nozzle is moveable laterally over a surface 12 of a workpiece. In this way, the electrolyte jet 26 is able to be traversed over the surface 12. In order to achieve this two axes of movement, the nozzle 24 is mounted to an actuator 40. In the arrangement shown, the actuator is a single plane bi-direction linear actuator 40, controlling the traversing of the jet over the surface 12. Although not illustrated, the nozzle 24 is pivotably mounted within the housing 24. In this way, the angle of the electrolyte jet 26 relative to the surface 12 is able to be changed to suit the machining operation.

The nozzle 24 is moveable within the housing 22 for adjusting the spacing between the nozzle 24 and the surface 12. In the arrangement shown, the nozzle 24 is mounted to the actuator 40 via a screw thread 42. This arrangement enables the nozzle 24 to be moved in a direction substantially perpendicular to the surface 12 (i.e. in a direction towards and away from the surface 12).

The base unit 14 is provided with a control system (not shown) that is configured to determine the spacing between the nozzle 24 and the surface 12 during a machining operation. Following this spacing determination, the control system is configured to adjust the position of the nozzle 24 so as to maintain a substantially constant spacing between the nozzle 24 and the surface 12, during a machining operation.

As discussed above, the spacing between the nozzle 24 and the surface 12 affects the resulting topography of the surface 12 after the machining process. Providing an arrangement that is able to maintain a constant spacing enables the surface 12 to be uniformly machined. This is particularly advantageous when the surface 12 is non-planar. In this arrangement, the spacing is determined by calculating an electrical resistance between the nozzle 24 and the surface 12, during a machining operation. The resistance is calculated from the current and the voltage within the electrolytic cell. It will be appreciated that in alternative embodiments, alternative arrangements for determining this spacing may be used, such as by using lasers, ultrasonic sensors or the like.

The machining unit 16 includes a gas outlet 46 within the housing 22. The gas outlet 46 is configured to dispense a jet a compressed gas (e.g. air) for focusing the electrolyte jet 26. In the arrangement shown, the gas outlet 46 is configured to dispense a gas stream which encircles the electrolyte jet 26, in use. Providing a gas stream encircling (i.e. providing a gas shroud around) the electrolyte jet 26 focuses the jet to enhance selectivity of the machining. In some arrangements, the gas stream may only partially surround the electrolyte jet 26.

Although not illustrated, the machining unit 16 may be provided with an attachment arrangement for attaching the machining unit 16 onto the surface 12, in use. The attachment arrangement may be configured to retain the machining unit 16 on the surface 12, whilst allowing the machining unit to be moveable along said surface 12. One example of such an attachment arrangement may be an attachment suction arrangement. Such an attachment suction arrangement may be provided in the form of one or more suction pumps in or on the housing 22.

Although not illustrated, in alternative arrangements the machining unit 16 may include first and second nozzles for dispensing an electrolyte jet towards a surface 12 to be machined. This allows a greater degree of control of the surface topography created and optimised cycle times due to exploitation of the dual electrolyte jets. In such arrangements, both the first and second nozzles may be configured to dispense the same electrolyte. Alternatively, the base unit 14 may include a second electrolyte reservoir, and the two nozzles may be configured for dispensing different electrolytes.

Although the invention has been described above with reference to one or more preferred embodiments, it will be appreciated that various changes or modifications may be made without departing from the scope of the invention as defined in the appended claims.

## Claims

1. An electrochemical machining device (10) for machining a surface (12) of a workpiece, the electrochemical machining device comprising:
a base unit (14); and
a portable machining unit (16) comprising a housing (22) for positioning against a surface (12) of a workpiece, a nozzle (24) disposed within the housing (22) and configured to dispense an electrolyte jet (26) towards a surface of a workpiece,
wherein the machining unit (16) is connected to the base unit (14) via an umbilical cord (18) for supplying power to the machining unit (16) and for supplying electrolyte to the nozzle (24),
wherein the electrochemical machining device (10) is configured to apply a charge to the nozzle (24) and to apply a charge to a surface (12) of a workpiece such that the nozzle (24) and said surface (12) define first and second electrodes of an electrolytic cell, in use, and
wherein the nozzle (24) is arranged so as to be spaced apart from a surface (12) of a workpiece, in use.

2. An electrochemical machining device (10) according to claim 1, wherein the nozzle (24) is moveable within the housing (22) along a plane substantially parallel with the surface, in use.

3. An electrochemical machining device (10) according to claim 1 or claim 2, wherein the nozzle (24) is moveable within the housing (22) such that the spacing between the nozzle (24) and a surface (12) of a workpiece is adjustable, in use.

4. An electrochemical machining device (10) according to any preceding claim, wherein the nozzle (24) is pivotable within the housing (22) for changing the angle of the electrolyte jet (26) relative to a surface (12) of a workpiece, in use.

5. An electrochemical machining device (10) according to any preceding claim, wherein the housing (22) is configured to engage a surface (12) of a workpiece so as to be moveable over said surface, in use.

6. An electrochemical machining device (10) according to any preceding claim, wherein the machining unit (16) comprises a contact electrode (44) configured an arranged to contact a surface (12) of a workpiece, in use, and to apply a current thereto.

7. An electrochemical machining device (10) according to any preceding claim, wherein the housing (22) comprise one or more contact points arranged to engage a surface of a workpiece, in use, and wherein the one or more contact points are formed from a malleable and/or deformable material, optionally wherein the one or more contact points are formed from a conductive material such that they are a contact electrode for configured an arranged to contact a surface (12) of a workpiece, in use, and to apply a current thereto.

8. An electrochemical machining device (10) according to any preceding claim, comprising a control system configured to determine the spacing between the nozzle (24) and a surface (12) of a workpiece, in use, optionally wherein the control system is configured so as to maintain a substantially constant spacing between the nozzle (24) and a surface (12) of a workpiece, during a machining operation, optionally wherein the control system determines the spacing between the nozzle (24) and a surface (12) of a workpiece by calculating an electrical resistance therebetween.

9. An electrochemical machining device (10) according to any preceding claim, wherein the housing (22) is configured to define an enclosed workspace when positioned against a surface (12 of a workpiece.

10. An electrochemical machining device (10) according to any preceding claim, wherein the base unit (14) comprises an electrolyte reservoir (28) for supplying electrolyte to the nozzle (24), and wherein the machining unit (16) comprises a retrieval arrangement for retrieving used electrolyte, optionally wherein the retrieval arrangement is configured to return the retrieved electrolyte to the electrolyte reservoir (28), optionally wherein the retrieved electrolyte is filtered prior to re-entering the electrolyte reservoir (28).

11. An electrochemical machining device (10) according to any preceding claim, wherein the machining unit (16) comprises an attachment arrangement for attaching the machining unit (16) onto a surface (12) of a workpiece, in use, optionally, wherein the attachment arrangement is configured to allow the machining unit (16) to move with respect to a surface (12) of a workpiece, in use, whilst remaining attached thereto.

12. An electrochemical machining device (10) according to any preceding claim, comprising an electrolyte monitoring system (36) for monitoring the electrolyte in the electrolyte reservoir (28), optionally wherein the electrolyte monitoring system (36) comprises one or more of: a pH sensor; a temperature sensor; an electrical conductivity sensor; and/or a particulate matter for determining the debris contained in the electrolyte within the electrolyte reservoir.

13. An electrochemical machining device (10) according to any preceding claim, wherein the machining unit (16) comprises a drive arrangement configured to move the machining unit (16) over a surface (12) of a workpiece, in use.

14. An electrochemical machining device (10) according to any preceding claim, wherein the umbilical cord (18) is connected to either the base unit (14) and/or the machining unit (16) via a quick connect/disconnect coupling configured such that, upon disconnection, supply of power and electrolyte is stopped.

15. An electrochemical machining device (10) according to any preceding claim, wherein the machining unit (16) comprises a gas outlet (46) arranged to dispense a gas stream which encircles the electrolyte jet (26), in use.

## Patentansprüche

1. Elektrochemische Bearbeitungsvorrichtung (10) zum Bearbeiten einer Oberfläche (12) eines Werkstücks, die elektrochemische Bearbeitungsvorrichtung umfassend:
eine Basiseinheit (14) und
eine tragbare Bearbeitungseinheit (16), umfassend ein Gehäuse (22) zur Anordnung an einer Oberfläche (12) eines Werkstücks und eine Düse (24), die innerhalb des Gehäuses (22) angeordnet und dazu beschaffen ist, einen Elektrolytstrahl (26) in Richtung einer Oberfläche eines Werkstücks abzugeben,
wobei die Bearbeitungseinheit (16) über eine Versorgungsleitung (18) mit der Basiseinheit (14) zur Stromversorgung der Bearbeitungseinheit (16) und zur Versorgung der Düse (24) mit Elektrolyt verbunden ist,
wobei die elektrochemische Bearbeitungsvorrichtung (10) dazu beschaffen ist, eine Ladung an die Düse (24) anzulegen und eine Ladung an eine Oberfläche (12) eines Werkstücks anzulegen, so dass die Düse (24) und die Oberfläche (12) im Gebrauch eine erste und eine zweite Elektrode einer Elektrolysezelle definieren, und
wobei die Düse (24) so angeordnet ist, dass sie im Gebrauch von einer Oberfläche (12) eines Werkstücks beabstandet ist.

2. Elektrochemische Bearbeitungsvorrichtung (10) nach Anspruch 1, wobei die Düse (24) im Gebrauch innerhalb des Gehäuses (22) entlang einer Ebene im Wesentlichen parallel zur Oberfläche beweglich ist.

3. Elektrochemische Bearbeitungsvorrichtung (10) nach Anspruch 1 oder Anspruch 2, wobei die Düse (24) im Gebrauch innerhalb des Gehäuses (22) derart beweglich ist, dass der Abstand zwischen der Düse (24) und einer Oberfläche (12) eines Werkstücks einstellbar ist.

4. Elektrochemische Bearbeitungsvorrichtung (10) nach einem der vorhergehenden Ansprüche, wobei die Düse (24) im Gebrauch innerhalb des Gehäuses (22) zur Änderung des Winkels des Elektrolytstrahls (26) relativ zu einer Oberfläche (12) eines Werkstücks schwenkbar ist.

5. Elektrochemische Bearbeitungsvorrichtung (10) nach einem der vorhergehenden Ansprüche, wobei das Gehäuse (22) dazu beschaffen ist, mit einer Oberfläche (12) eines Werkstücks in Eingriff zu kommen, so dass es im Gebrauch über diese Oberfläche beweglich ist.

6. Elektrochemische Bearbeitungsvorrichtung (10) nach einem der vorhergehenden Ansprüche, wobei die Bearbeitungseinheit (16) eine Kontaktelektrode (44) umfasst, die so beschaffen und angeordnet ist, dass sie im Gebrauch mit einer Oberfläche (12) eines Werkstücks in Kontakt kommt und einen Strom daran anlegt.

7. Elektrochemische Bearbeitungsvorrichtung (10) nach einem der vorhergehenden Ansprüche, wobei das Gehäuse (22) einen oder mehrere Kontaktpunkte umfasst, die so angeordnet sind, dass sie im Gebrauch mit einer Oberfläche eines Werkstücks in Kontakt kommen, und wobei der eine oder die mehreren Kontaktpunkte aus einem plastischen und/oder verformbaren Material gebildet sind, wobei optional der eine oder die mehreren Kontaktpunkte aus einem leitfähigen Material gebildet sind, so dass sie eine Kontaktelektrode sind, die so beschaffen und angeordnet ist, dass sie im Gebrauch mit einer Oberfläche (12) eines Werkstücks in Kontakt kommt und einen Strom daran anlegt.

8. Elektrochemische Bearbeitungsvorrichtung (10) nach einem der vorhergehenden Ansprüche, umfassend ein Steuersystem, das dazu beschaffen ist, im Gebrauch den Abstand zwischen der Düse (24) und einer Oberfläche (12) eines Werkstücks zu bestimmen, wobei optional das Steuersystem dazu beschaffen ist, während eines Bearbeitungsvorgangs einen im Wesentlichen konstanten Abstand zwischen der Düse (24) und einer Oberfläche (12) eines Werkstücks aufrechtzuerhalten, wobei optional das Steuersystem den Abstand zwischen der Düse (24) und einer Oberfläche (12) eines Werkstücks durch Berechnen des elektrischen Widerstands dazwischen bestimmt.

9. Elektrochemische Bearbeitungsvorrichtung (10) nach einem der vorhergehenden Ansprüche, wobei das Gehäuse (22) dazu beschaffen ist, einen geschlossenen Arbeitsbereich zu definieren, wenn es an einer Oberfläche (12) eines Werkstücks angeordnet wird.

10. Elektrochemische Bearbeitungsvorrichtung (10) nach einem der vorhergehenden Ansprüche, wobei die Basiseinheit (14) ein Elektrolytreservoir (28) zum Zuführen von Elektrolyt zur Düse (24) umfasst und wobei die Bearbeitungseinheit (16) eine Rückgewinnungsanordnung zur Rückgewinnung von verbrauchtem Elektrolyten umfasst, optional wobei die Rückgewinnungsanordnung dazu beschaffen ist, den rückgewonnenen Elektrolyten zum Elektrolytreservoir (28) zurückführen, optional wobei der rückgewonnene Elektrolyt vor den erneuten Eintrag in das Elektrolytreservoir (28) gefiltert wird.

11. Elektrochemische Bearbeitungsvorrichtung (10) nach einem der vorhergehenden Ansprüche, wobei die Bearbeitungseinheit (16) eine Anbringungsanordnung zum Anbringen der Bearbeitungseinheit (16) an einer Oberfläche (12) eines Werkstücks im Gebrauch umfasst, wobei die Anbringungsanordnung optional dazu beschaffen ist, es der Bearbeitungseinheit (16) im Betrieb zu ermöglichen, sich relativ zu einer Oberfläche (12) eines Werkstücks zu bewegen, während sie daran befestigt bleibt.

12. Elektrochemische Bearbeitungsvorrichtung (10) nach einem der vorhergehenden Ansprüche, umfassend ein Elektrolytüberwachungssystem (36) zum Überwachen des Elektrolyten im Elektrolytreservoir (28), wobei das Elektrolytüberwachungssystem (36) optional eines oder mehrere umfasst von: einem pH-Sensor, einem Temperatursensor, einem elektrischen Leitfähigkeitssensor und/oder einem Partikelmaterial zur Bestimmung der im Elektrolyten im Elektrolytreservoir enthaltenen Ablagerungen.

13. Elektrochemische Bearbeitungsvorrichtung (10) nach einem der vorhergehenden Ansprüche, wobei die Bearbeitungseinheit (16) eine Antriebsanordnung umfasst, die dazu beschaffen ist, die Bearbeitungseinheit (16) im Gebrauch über eine Oberfläche (12) eines Werkstücks zu bewegen.

14. Elektrochemische Bearbeitungsvorrichtung (10) nach einem der vorhergehenden Ansprüche, wobei die Versorgungsleitung (18) mit der Basiseinheit (14) und/oder der Bearbeitungseinheit (16) über eine Schnellverbindungs- und -trennkupplung, die derart beschaffen ist, dass beim Trennen die Strom- und Elektrolytzufuhr unterbrochen wird, verbunden ist.

15. Elektrochemische Bearbeitungsvorrichtung (10) nach einem der vorhergehenden Ansprüche, wobei die Bearbeitungseinheit (16) einen Gasauslass (46) umfasst, der so angeordnet ist, dass er im Betrieb einen Gasstrom abgibt, der den Elektrolytstrahl (26) umgibt.

## Revendications

1. Dispositif d'usinage électrochimique (10) pour usiner une surface (12) d'une pièce à usiner, le dispositif d'usinage électrochimique comprenant :
une unité de base (14) ; et
une unité d'usinage portable (16) comprenant un boîtier (22) destiné à être positionné contre une surface (12) d'une pièce à usiner, une buse (24) disposée à l'intérieur du boîtier (22) et configurée pour distribuer un jet d'électrolyte (26) vers une surface d'une pièce à usiner,
dans lequel l'unité d'usinage (16) est reliée à l'unité de base (14) via un cordon ombilical (18) pour fournir de l'énergie à l'unité d'usinage (16) et pour fournir de l'électrolyte à la buse (24),
dans lequel le dispositif d'usinage électrochimique (10) est configuré pour appliquer une charge à la buse (24) et appliquer une charge à une surface (12) d'une pièce à usiner de telle sorte que la buse (24) et ladite surface (12) définissent des première et seconde électrodes d'une cellule électrolytique, en cours d'utilisation, et
dans lequel la buse (24) est agencée de manière à être espacée d'une surface (12) d'une pièce à usiner, en cours d'utilisation.

2. Dispositif d'usinage électrochimique (10) selon la revendication 1, dans lequel la buse (24) est mobile à l'intérieur du boîtier (22) le long d'un plan sensiblement parallèle à la surface, en cours utilisation.

3. Dispositif d'usinage électrochimique (10) selon la revendication 1 ou la revendication 2, dans lequel la buse (24) est mobile à l'intérieur du boîtier (22) de telle sorte que l'espacement entre la buse (24) et une surface (12) d'une pièce à usiner est réglable, en cours d'utilisation.

4. Dispositif d'usinage électrochimique (10) selon l'une quelconque des revendications précédentes, dans lequel la buse (24) peut pivoter à l'intérieur du boîtier (22) pour modifier l'angle du jet d'électrolyte (26) par rapport à une surface (12) d'une pièce à usiner, en cours d'utilisation.

5. Dispositif d'usinage électrochimique (10) selon l'une quelconque des revendications précédentes, dans lequel le boîtier (22) est configuré pour engager une surface (12) d'une pièce à usiner de manière à pouvoir être déplacée sur ladite surface, en cours d'utilisation.

6. Dispositif d'usinage électrochimique (10) selon l'une quelconque des revendications précédentes, dans lequel l'unité d'usinage (16) comprend une électrode de contact (44) configurée et agencée pour entrer en contact avec une surface (12) d'une pièce à usiner, en cours d'utilisation, et pour appliquer un courant à celle-ci.

7. Dispositif d'usinage électrochimique (10) selon l'une quelconque des revendications précédentes, dans lequel le boîtier (22) comprend un ou plusieurs points de contact agencés pour engager une surface d'une pièce à usiner, en cours d'utilisation, et dans lequel le ou les points de contact sont formés à partir d'un matériau malléable et/ou déformable, éventuellement dans lequel le ou les points de contact sont formés à partir d'un matériau conducteur de telle sorte qu'ils constituent une électrode de contact configurée et agencée pour entrer en contact avec une surface (12) d'une pièce à usiner, en cours d'utilisation, et pour y appliquer un courant.

8. Dispositif d'usinage électrochimique (10) selon l'une quelconque des revendications précédentes, comprenant un système de commande configuré pour déterminer l'espacement entre la buse (24) et une surface (12) d'une pièce à usiner, en cours d'utilisation, éventuellement dans lequel le système de commande est configuré de manière à maintenir un espacement sensiblement constant entre la buse (24) et une surface (12) d'une pièce à usiner, pendant une opération d'usinage, éventuellement dans lequel le système de commande détermine l'espacement entre la buse (24) et une surface (12) d'une pièce à usiner en calculant une résistance électrique entre elles.

9. Dispositif d'usinage électrochimique (10) selon l'une quelconque des revendications précédentes, dans lequel le boîtier (22) est configuré pour définir un espace de travail fermé lorsqu'il est positionné contre une surface (12) d'une pièce à usiner.

10. Dispositif d'usinage électrochimique (10) selon l'une quelconque des revendications précédentes, dans lequel l'unité de base (14) comprend un réservoir d'électrolyte (28) pour fournir de l'électrolyte à la buse (24), et dans lequel l'unité d'usinage (16) comprend un agencement de récupération pour récupérer l'électrolyte usé, éventuellement dans lequel l'agencement de récupération est configuré pour renvoyer l'électrolyte récupéré vers le réservoir d'électrolyte (28), éventuellement dans lequel l'électrolyte récupéré est filtré avant de rentrer de nouveau dans le réservoir d'électrolyte (28).

11. Dispositif d'usinage électrochimique (10) selon l'une quelconque des revendications précédentes, dans lequel l'unité d'usinage (16) comprend un agencement de fixation pour fixer l'unité d'usinage (16) sur une surface (12) d'une pièce à usiner, en cours d'utilisation, facultativement, dans lequel l'agencement de fixation est configuré pour permettre à l'unité d'usinage (16) de se déplacer par rapport à une surface (12) d'une pièce à usiner, en cours d'utilisation, tout en restant fixée à celle-ci.

12. Dispositif d'usinage électrochimique (10) selon l'une quelconque des revendications précédentes, comprenant un système de surveillance de l'électrolyte (36) pour surveiller l'électrolyte dans le réservoir d'électrolyte (28), éventuellement dans lequel le système de surveillance de l'électrolyte (36) comprend un ou plusieurs des éléments suivants : un capteur de pH ; un capteur de température ; un capteur de conductivité électrique ; et/ou une matière particulaire pour déterminer les débris contenus dans l'électrolyte à l'intérieur du réservoir d'électrolyte.

13. Dispositif d'usinage électrochimique (10) selon l'une quelconque des revendications précédentes, dans lequel l'unité d'usinage (16) comprend un agencement d'entraînement configuré pour déplacer l'unité d'usinage (16) sur une surface (12) d'une pièce à usiner, en cours d'utilisation.

14. Dispositif d'usinage électrochimique (10) selon l'une quelconque des revendications précédentes, dans lequel le cordon ombilical (18) est connecté soit à l'unité de base (14) et/ou l'unité d'usinage (16) via un couplage de connexion/déconnexion rapide configuré de telle sorte que, lors de la déconnexion, l'alimentation en énergie et en électrolyte est arrêtée.

15. Dispositif d'usinage électrochimique (10) selon l'une quelconque des revendications précédentes, dans lequel l'unité d'usinage (16) comprend une sortie de gaz (46) agencée pour distribuer un flux de gaz qui entoure le jet d'électrolyte (26), en utilisation.
